# EUROPÄISCHE PATENTSCHRIFT

(11) **EP 2 103 060 B1**
(45) Veröffentlichungstag und Bekanntmachung des Hinweises auf die Patenterteilung: **12.09.2018**
(21) Anmeldenummer: 07856048.9
(22) Anmeldetag: 30.11.2007
(51) Int. Cl.: H04L 12/58

(54) **VERFAHREN DER ZUSTELLUNG EINER IN MINDESTENS EINER ELEKTRONISCHEN DARSTELLUNG VORLIEGENDEN PRIMÄR-INFORMATION**
METHOD FOR DELIVERING PRIMARY INFORMATION THAT EXISTS IN AT LEAST ONE ELECTRONIC FORM
PORCÉDÉ POUR DISTRIBUER DES INFORMATIONS PRIMAIRES QUI EXISTENT AU MOINS SOUS FORME ÉLECTRONIQUE

(30) Priorität: 30.11.2006 DE 102006057120; 30.11.2006 US 867921 P
(43) Veröffentlichungstag der Anmeldung: 23.09.2009
(73) Patentinhaber: Sigram Schindler Beteiligungsgesellschaft mbH, 12099 Berlin (DE)
(72) Erfinder: SCHINDLER, Sigram, 14129 Berlin (DE); SCHULZE, Jürgen, 13595 Berlin (DE)
(74) Vertreter: adares Patent- und Rechtsanwälte Reininger & Partner GmbB
(86) Internationale Anmeldenummer: PCT/DE2007/002166
(87) Internationale Veröffentlichungsnummer: WO 2008/064668

(56) Entgegenhaltungen:
- WO-A-01/90904
- DE-A1-102005 001 351
- GB-A- 2 382 494

## Beschreibung

Die Erfindung betrifft ein Verfahren der Zustellung einer in mindestens einer elektronischen Darstellung vorliegenden Primär-Information sowie eine Telekommunikationsanordnung und eine Telekommunikationseinrichtung, die zur Durchführung des Verfahrens oder zur Verwendung in dem Verfahren geeignet sind. Insbesondere betrifft die Erfindung ein Verfahren der Zustellung einer Primär-Information, das es ermöglicht, über die Tatsache des Lesens der übertragenen Primär-Information hinaus auch die Kenntnisnahme der Primär-Information bei deren Adressaten zu erfassen und zu speichern.

### Hintergrund der Erfindung

Der Beweis, dass eine bestimmte Information einem bestimmten Informationsempfänger zugegangen ist, kann aus rechtlichen oder tatsächlichen Gründen von großer Bedeutung sein. Bei der nichtelektronischen Übersendung von Informationen mittels Briefzustellung ist es möglich, einen solchen Beweis beispielsweise durch Übersenden eines Briefs per Einschreiben mit Rückschein zu führen, wobei bei dieser Versendungsart der Absender eine Empfangsbestätigung mit der Original-Unterschrift des Empfangenden, den Rückschein, zurück erhält. Auch eine Zustellung durch einen Gerichtsvollzieher ist in manchen Rechtsordnungen möglich.

Diese altbewährten Methoden der Beweisführung einer Zustellung stehen bei einer elektronischen Versendung von Informationen beispielsweise per E-Mail nicht zur Verfügung. Bekannte E-Mail-Programme sehen vor, eine Übermittlungsbestätigung bereitzustellen. In einem solchen Fall wird der Absender mittels der Übermittlungsbestätigung darüber informiert, dass die übersandte E-Mail-Nachricht dem Postfach des Empfängers zugestellt wurde. Weiter kann eine Lesebestätigung angefordert werden, die den Absender darüber informiert, dass eine übersandte Nachricht aus dem Postfach des Empfängers abgeholt und geöffnet wurde. Ein Beweis des Zugangs einer elektronischen Nachricht ist mit einer solchen Übermittlungs- oder Lesebestätigung allerdings nicht möglich. Dies ist aus mehreren Gründen der Fall. Ein erster Grund besteht darin, dass eine Lesebestätigung nur dokumentiert, dass eine bestimmte Nachricht gelesen wurde. Der Inhalt der gelesenen Nachricht wird nicht dokumentiert. Damit kann beispielsweise nicht ausgeschlossen werden, dass die ursprünglich übersandte Nachricht in manipulierter Form oder nur teilweise dem Empfänger zuging.
Ein zweites Problem besteht darin, dass das Telekommunikationssystem des Adressaten möglicherweise derart eingestellt ist, dass das Versenden einer Übermittlungsbestätigung oder Lesebestätigung abgelehnt wird. Ein "nicht kooperativer" Adressat kann daher aus eigener Macht den Nachweis des Empfangs der Nachricht verhindern.
Ein drittes Problem und wesentliches besteht darin, dass eine Lesebestätigung nur dokumentiert, dass eine Nachricht gelesen wurde, jedoch keine Aussage darüber zulässt, durch wen sie gelesen wurde. Insbesondere ist kein Rückschluss darüber möglich, ob die Information von dem Adressat zur Kenntnis genommen, d.h. semantisch erfasst wurde. Als Adressat wird dabei die Entität verstanden, die gemäß dem Willen des Absenders die Nachricht zur Kenntnis nehmen und semantisch erfassen soll, also in der Regel ein menschlicher Empfänger.

Die Patentanmeldung mit der Anmeldenummer DE 10 2005 001351 A1 offenbart ein Verfahren zur Übertragung von Daten an mindestens ein Kommunikations-Endsystem. Dabei wird eine Datenmenge, die ein Sprachsignal enthält oder in ein Sprachsignal umgewandelt wird, an eine Kommunikationseinrichtung übertragen, die eine Verbindung zu einem Kommunikations-Endsystem aufbaut und das Sprachsignal überträgt und abspielt. Bei erfolgreichem Abspielen des Sprachsignals kann bei dem Kommunikations-Endsystem eine Bestätigung ausgelöst und ausgesandt werden. Dabei wird eine semantisch deutbare Antwort des Nutzers auf das Sprachsignal erfasst und ausgewertet in einer ersten Variante durch Sprachinformationen mit Anweisungen, auf die der Nutzer des Kommunikations-Endsystems antworten kann, und in einer zweiten Variante durch Auswerten einer Sprachantwort des Nutzers mittels einer Spracherkennung.

Dementsprechend besteht ein Bedarf, ein Verfahren der Zustellung einer in mindestens einer elektronischen Darstellung vorliegenden Primär-Information und zugehörige Telekommunikationseinrichtungen bereitzustellen, die die Möglichkeiten eines Adressaten, die Tatsache der Zustellung der Primär-Information abzustreiten, reduzieren und im besten Fall den Beweis der Zustellung beim Adressaten ermöglichen.

### Zusammenfassung der Erfindung

Diese Aufgabe wird erfindungsgemäß durch ein Verfahren mit den Merkmalen des Anspruchs 1, eine Telekommunikationsanordnung mit den Merkmalen des Anspruchs 14 und eine Telekommunikationseinrichtung mit den Merkmalen des Anspruchs 15 gelöst. Ausgestaltungen der Erfindung sind in den Unteransprüchen angegeben.

Danach ist in der vorliegenden Erfindung vorgesehen, dass Verifikations-Informationen betreffend die Kenntnisnahme der Primär-Informationen beim Adressaten erzeugt und diese Verifikations-Informationen gespeichert werden. Die Speicherung der Informationen kann bei einem dem Adressaten zugeordneten Kommunikations-Endsystem erfolgen. In der Regel wird die Verifikations-Information jedoch entweder bei einem Dritten erzeugt und/oder über mindestens ein Kommunikationsnetz an einen solchen Dritten übertragen, wobei dieser Dritte beispielsweise der Absender, eine vertrauenswürdige dritte Partei, oder ein Automat sein kann, der an oder in einem Kommunikationsnetz angeordnet ist und Verifikations-Informationen betreffend die Kenntnisnahme der Primär-Information beim Adressaten auswertet und/oder speichert.
Die Erfindung stellt damit in einem Aspekt individualisierte Daten zur Verfügung, die über die Tatsache des Eingangs der Primär-Information beim Kommunikationssystem des Adressaten hinaus auch die Kenntnisnahme der Primär-Information durch den Adressaten dokumentieren. In diesem Sinne stellt die Erfindung in einem Aspekt eine individualisierte automatische Lesebestätigung zur Verfügung, die die Kenntnisnahme der Primärinformation durch den Adressaten dokumentiert.
Weiter wird darauf hingewiesen, dass die vorliegenden Erfindung nicht die bewusste aktive Mitwirkung des Adressaten der zu übermittelnden Information verlangt, auch wenn ein solche Mitwirkung in Aspekten der Erfindung durchaus möglich ist. Sofern eine aktive bewusste Mitwirkung eines Adressaten beim Erzeugen von Verifikations-Informationen nicht erforderlich ist, ist dies mit dem Vorteil verbunden, dass der Adressat eine Zustellung nicht oder nur erschwert vereiteln kann. Die Verifikations-Informationen beschränken oder verhindern die Möglichkeit des Adressaten, eine erfolgte Zustellung abzustreiten. In diesem Sinne stellt die vorliegende Erfindung Abstreitbarkeitsbeschränkungen bereit, die eine unterschiedliche Aussagekraft aufweisen können, die auch als Nichtabstreitbarkeitsstufen bezeichnet werden.
Die Erfindung sieht somit vor, dass nicht lediglich die Tatsache automatisch erfasst wird, dass eine übersandte Primärinformation beim Kommunikations-Endsystem des Adressaten empfangen und gelesen wurde. Die Verifikations-Information betrifft Informationen zur Zustellung und Kenntnisnahme der Primär-Informationen beim Adressaten selbst.

Hierzu ist in der Erfindung vorgesehen, dass das Erzeugen der Verifikations-Informationen eine direkte oder indirekte Interaktion mit dem Empfänger der Information, für den diese bestimmt ist, also dem Adressaten umfasst. Die Interaktion mit dem Adressaten hängt dabei für diesen nicht unmittelbar erkennbar mit der Erzeugung der Verifikations-Information zusammen. Die direkte oder indirekte Interaktion mit dem Adressaten kann bei und/oder nach Erhalt der Primär-Information beim Kommunikationssystem des Adressaten erfolgen. Bei der direkten oder indirekten Interaktion handelt es sich um ein Telefonat mit dem Adressaten, das sich auf Inhalte der übersandten Nachricht bezieht, sowie ein Speichern der Aufzeichnung des Frequenzspektrums des Sprachsignals des Adressaten. Das Frequenzspektrum, aufgezeichnet zu einer bestimmten Zeit und in Bezug auf eine bestimmte Telefonnummer, kann den Nachweis liefern, dass eine bestimmte Person zu einer bestimmten Zeit an einem bestimmten Ort zugegen war. Zusammen mit weiteren Informationen, wie einer Lesebestätigung, kann dies ein Kriterium darstellen, das die Abstreitbarkeit einer Zustellung durch den Adressaten zumindest beschränkt (nachfolgend auch als Abstreitbarkeitsbeschränkung bezeichnet).

Ein weiteres Beispiel für eine Interaktion mit dem Adressaten, aus der Verifikations-Informationen abgeleitet werden, ist das Übersenden einer E-Mail an den Adressaten, die sich indirekt auf die Primär-Information bezieht. Beispielsweise wird die Primär-Information als Sprachnachricht zugestellt und erhält der Adressat zeitgleich oder kurz danach eine e-mail, die sich auf die zugestellte Sprachnachricht bezieht. Eine Antwort auf die e-mail durch den Adressaten kann eine Verifikations-Information hinsichtlich der Zustellung der Sprachnachricht darstellen.

In einer weiteren Ausgestaltung der Erfindung wird die Verifikations-Information zur Zustellung der Primär-Information beim Adressaten durch eine intelligente Auswertung von Protokollinformationen erhalten. Protokollinformationen umfassen insbesondere sämtliche Signalisierungsinformationen zum Verbindungsaufbau zwischen dem Absender und dem Telekommunikationssystem des Adressaten. Solche Protokollinformationen können mitgeschnitten und die entsprechenden Protokollschritte gespeichert werden.

Unter das Erzeugen von Verifikations-Informationen durch eine intelligente Auswertung von Protokollinformationen fällt auch der Fall, dass der Adressat Authentifizierungsinformationen an den Absender übersendet. Dies kann beispielsweise mittels einer elektronischen Signatur erfolgen. Beispielsweise kann einer solche elektronische Signatur einer Lesebestätigung hinzugefügt werden. Eine solche Authentifizierung erfordert die bewusste Mitwirkung des Adressaten bei der Bestätigung der Zustellung der Primärinformation. Dies ist ein Fall, der durch die Erfindung nicht ausgeschlossen wird. Tatsächlich werden in den meisten Fällen die Adressaten der übersandten Primärinformationen bereit sein, die Tatsache des Empfangs zu bestätigen.

In einer weiteren Ausgestaltung der Erfindung wird die Verifikations-Information zur Zustellung der Primär-Information beim Adressaten durch das Übersenden eines Computerprogramms oder Cookies an dessen Kommunikationsgerät ermittelt, wobei das Cookie derart ausgebildet ist, dass es ein Lesen der empfangenen Information durch den Adressat erfasst und diese Verifikations-Information speichert und/oder an den Absender der Information oder einen Dritten sendet.

In einem weiteren Aspekt der Erfindung kann vorgesehen sein, dass auf eine "Kommunikations-netzseitige" Unterstützung des Zustellungsverfahrens weitgehend verzichtet wird.

In einer Ausgestaltung der Erfindung ist vorgesehen, dass die Primär-Information vor oder bei ihrem Empfang beim Kommunikationssystem eine Umwandlung in ein anderes Medium erfährt. Beispielsweise wird die Primär-Information zunächst als elektronische Mail übertragen wird, die vor oder bei der Zustellung in ein Sprachsignal umgewandelt wird. Dies kann beispielsweise durch einen Sprachgenerator erfolgen. Auch kann vorgesehen sein, dass dem Sprachsignal Sprachinformationen mit Anweisungen hinzufügt sind, wie der Empfang des Sprachsignals zu bestätigen ist, oder das Sprachsignal bereits solche Informationen enthält.

Zu der verwendeten Terminologie wird auf Folgendes hingewiesen.

Eine Primärinformation kann sein oder enthalten Text und Grafiken in Schrift oder jeder anderen Darstellungsart, Audio- und/oder Videonachrichten jeder Art und jeder Darstellungsart, beliebige Mischformen der vorstehenden Arten und weiterer - nicht beschränkt auf menschlich wahrnehmbare - Inhalts- und Darstellungsarten, Identifikationen, Kennzeichnungen, Auszeichnungen und Beschreibungen der Nachrichten. Auch kann es sich um Nachrichten-Übermittlungsinformationen wie z. B. Protokoll-/Signalisierungsinformationen aller Arten handeln.

Ein Zustellen einer Primär-Information erfolgt im Rahmen eines Kommunikationsvorgangs. Dieser kann beispielsweise eine elektronische Mailnachricht (E-Mail) aber auch jede andere Art elektronischer Datenübertragung wie z.B. per Telefon, per Telefax, per SMS etc. umfassen.

Ein Telekommunikationsnetz kann ein Kommunikationsnetz sein, beispielsweise das herkömmliche Telefonnetz, das Internet, Mobilfunknetze, Next-Generation-Netze, etc. Unter einem Telekommunikationsnetz wird dabei auch ein Kommunikationsnetz verstanden, das durch konventionelle Transportwege irgendeines konventionellen Transportnetzes (z. B. Deutsche Post, FedEx, DHL) beliebig ergänzt wird, sowohl zustellungs-initial, mittig, als auch zustellungs-terminal.

Ein Adressat im Sinne der vorliegenden Erfindung ist der Empfänger der Primärinformation, für den diese bestimmt ist. In der Regel wird es sich um ein menschliches Wesen handeln. Vom Adressaten zu unterscheiden ist das Kommunikationssystem, in der Regel ein Kommunikations-Endsystem, das dem Adressaten zugeordnet ist und in dem die Primärinformation elektronisch empfangen wird. Weiter ist vom Adressaten zu trennen der Empfänger einer übertragenden Primär-Information. Der Empfänger ist die Bedienperson/der Nutzer des Kommunikationssystems, das dem Adressaten zugeordnet ist. Der Empfänger kann dabei mit dem Adressaten identisch sein. Die Bedienperson/der Nutzer des Kommunikationssystems kann aber auch von dem Adressaten unterschiedlich sein. Beispielsweise kann es sich um eine Sekretärin oder um ein Familienmitglied des Adressaten handeln.

In einer Ausgestaltung der Erfindung braucht der Adressat beim Aussenden der Primär-Information noch nicht festzustehen, z.B. in dem Sinne, dass mehrere Adressaten für die Kenntnisnahme in Frage kommen können. Wenn zum Beispiel einem Unternehmen oder einer Gruppe potentieller Adressaten zugestellt wird, so kommen mehrere Adressaten in Frage. Es ist dann aber bevorzugt zu dokumentieren, welcher Adressat die Primär-Information zur Kenntnis genommen hat.

### Beschreibung von Ausführungsbeispielen der Erfindung

Die Erfindung wird nachfolgend unter Bezugnahme auf die Figuren der Zeichnung anhand mehrerer Ausführungsbeispiele näher erläutert. Es zeigen:
- Fig. 1: ein Telekommunikationsnetz und damit verbundene Kommunikationssysteme, die einem Absender und einem Adressaten zugeordnet sind, zwischen denen eine Primär-Information übertragen werden soll;
- Fig. 2: Verifikationsstufen hinsichtlich des Nachweises der Zustellung einer Primär-Information bei einem Adressat;
- Fig. 3: ein Ausführungsbeispiel zur Erzeugung von Verifikations-Informationen betreffend die Zustellung einer Primär-Information bei einem Adressat;
- Fig. 4: ein weiteres Ausführungsbeispiel zur Erzeugung von Verifikations-Informationen betreffend die Zustellung einer Primär-Information bei einem Adressat; und
- Fig. 5: eine Kommunikationssequenz zur Zustellung von Primär-Informationen und zur Erzeugung von Verifikations-Informationen zur Kenntnisnahme dieser Primär-Informationen durch den Adressaten.

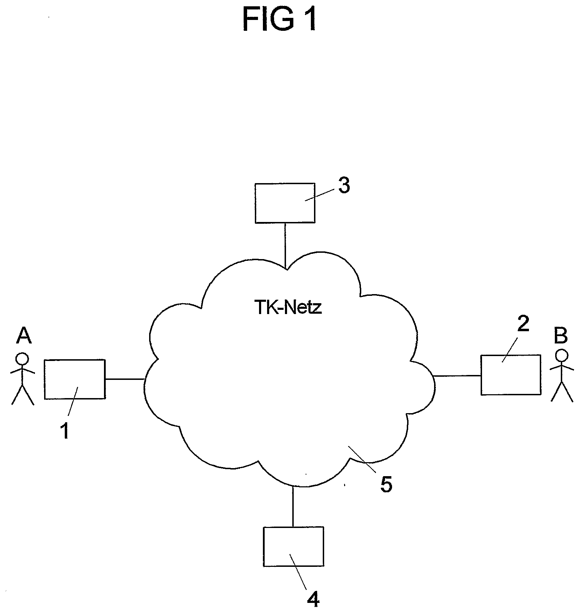

Die Fig. 1 zeigt schematisch eine Telekommunikationsanordnung mit einem Telekommunikationsnetz 5, an das zwei Telekommunikations-Endsysteme (TK-Endsysteme) angeschlossen sind. Dem TK-Endsystem 1, 2 ist jeweils ein menschlicher Nutzer A, B zugeordnet. Bei dem TK-Endsystem 1, 2 kann es sich um ein einzelnes Telekommunikationsendgerät wie einen PC, einen Laptop, ein Telefon (einschließlich Mobiltelefon) oder einen PDA handeln. Ebenso kann es sich bei dem Endsystem 1, 2 um ein lokales System aus mehreren Komponenten wie beispielsweise Telefon, PC, Laptop, Faxgerät, TK-Anlage und Server handeln.

Es sei im Folgenden angenommen, dass der Absender A mit Hilfe des TK-Endsystems 1 eine bestimmte Information (Primär-Information) über das TK-Netz 5 an das TK-Endsystem 2 zur Kenntnisnahme und Informationserfassung an den Adressaten B versendet.

An das TK-Netz 5 sind des Weiteren ein intermediärer Adressat 3 sowie ein Interaktionsautomat 4 angeschlossen. Beide Vorrichtungen 3, 4 sind optional und nur in Ausgestaltungen der Erfindungen vorhanden.

Bei dem intermediären Adressat 3 kann es sich beispielsweise um einen vertrauenswürdigen Dritten handeln, beispielsweise einen Notar, an den die Primär-Information zunächst vom TK-Endsystem 1 gesendet wird. Vom intermediären Adressaten 3 wird die Information dann weiter an das TK-Endsystem 2 gesandt. Protokoll- bzw. Signalisierungsinformationen, die zur Übertragung der Primär-Information zwischen den involvierten Einheiten übertragen werden, werden dabei auch zum einen zwischen dem TK-Endsystem 1 und dem intermediären Adressaten 3 und zum anderen zwischen dem intermediären Adressaten 3 und dem TK-Endsystem 2 übertragen.

Beim intermediären Adressaten 3 kann es sich um eine vertrauenswürdige dritte Partei handeln, der die beiden anderen Parteien A, B vertrauen (so genannte Trusted Third Party, TTP). Solche TTPs sammeln üblicherweise Beweise über Transaktionen, bewahren diese auf und machen Sie im Bedarfsfall zugänglich. Ihre Aktivität kann eine Schlüssel- und Identitäts-Zertifizierung umfassen. Der intermediäre Dritte 3 muss aber nicht eine solche vertrauenswürdige dritte Partei darstellen, sondern kann auch einen darunter liegenden Vertrauensgrad aufweisen, oder auch überhaupt keinen Vertrauensgrad.

In einer weiteren Ausgestaltung kann auch vorgesehen sein, dass der intermediäre Adressat 3 lediglich eine Kopie der vom Absender A an den Adressaten B übersandten Primär-Information erhält, wobei die eigentliche Kommunikation ausschließlich zwischen dem Absender A und dem Adressaten B bzw. den diesen zugeordneten TK-Systemen 1, 2 erfolgt. Die Übersendung einer Kopie der übertragenen Informationen an das intermediäre System 3 dient dann dem Nachweis des Versuchs einer Zustellung an den Adressaten B.

Es wird darauf hingewiesen, dass der intermediäre Adressat bei Absenden der Primär-Information noch nicht feststehen muss, der intermediäre Adressat aber beispielsweise durch bestimmte Attribute, die er aufweisen sollte, bestimmbar ist.

Der intermediäre Adressat ist in der Figur 1 als an das TK-Netz 3 verbunden dargestellt. Alternativ kann er auch im Netz angeordnet sein. Auch kann es sich um eine Einheit des Endsystems 1, 2 des Absenders A oder Adressaten B handeln.

Der ebenfalls optionale Interaktionsautomat 5 kann dazu dienen, in automatisierter Weise eine direkte oder indirekte Interaktion mit dem Adressaten B (und nicht nur dessen TK-Endsystem 2) bereitzustellen, und die entsprechenden Verifikations-Informationen zu speichern und gegebenenfalls an weitere TK-Einrichtungen zu übertragen. Dies wird anhand von Ausführungsbeispielen noch im Einzelnen erläutert werden. Der Interaktionsautomat 4 kann dabei Teil eines intermediären Adressaten 3 sein. Auch ist es möglich, dass der Interaktionsautomat 4 lediglich eine Kopie der vom Absender A an den Adressaten B übersandten Primär-Information erhält, und auf der Basis dieser Information und eventueller zusätzlicher Befehle des Absenders A eine Interaktion mit dem Adressaten B vornimmt und protokolliert.

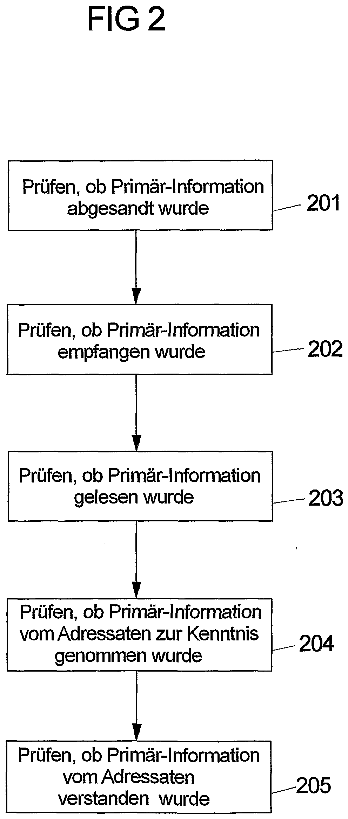

Die Fig. 2 zeigt verschiedene Verifikationsstufen, die grundsätzlich bei der Zustellung einer Primär-Information bei einem Adressaten erfüllt sein können. Eine erste Verifikationsstufe 201 betrifft das Prüfen, ob die Primär-Information beim Absender abgesandt wurde. Eine solche Prüfung erfolgt beim Absender bzw. dessen Endsystem 1. Eine zweite Verifikationsstufe 202 betrifft das Prüfen und Feststellen, ob die Primär-Information beim TK-Endsystem 2 des Adressaten empfangen wurde. Einer solchen Verifikationsstufe entspricht beispielsweise eine aus E-Mail-Programmen bekannte Übermittlungsbestätigung.

Eine dritte Verifikationsstufe 203 betrifft das Prüfen bzw. Feststellen, ob die Primär-Information beim TK-Endsystem 2 des Adressaten B gelesen wurde. Einer solchen Verifikationsstufe entspricht ein aus E-Mail-Programmen bekannte Lesebestätigung. Eine vierte Verifikationsstufe 204 betrifft das Prüfen bzw. Feststellen, ob eine Primär-Information vom Adressaten zur Kenntnis genommen wurde. Erst diese Verifikationsstufe 204 ermöglicht den Nachweis oder idealerweise sogar Beweis im juristischen Sinne eines Zugangs der Primär-Information beim Adressaten.

Eine fünfte Verifikationsstufe 205 schließlich betrifft das Prüfen und Feststellen, dass der Adressat die Primär-Information erfasst, also gelesen und/oder gehört und/oder gesehen und semantisch verstanden hat. Diese letzte Verifikationsstufe 205 ist in der Regel nicht erforderlich, um den Beweis eines Zugangs beim Adressaten zu führen. Auch bei einer herkömmlichen Postzustellung kann einer Empfangsbestätigung nur die Information entnommen werden, dass der Adressat die Sendung empfangen hat. Ob er sie auch gelesen hat, ist der subjektiven Sphäre zuzuordnen und in der Regel nicht bestimmbar. Das erfindungsgemäße Verfahren ermöglicht jedoch teilweise auch eine Verifikation auf der Verifikationsstufe 5.

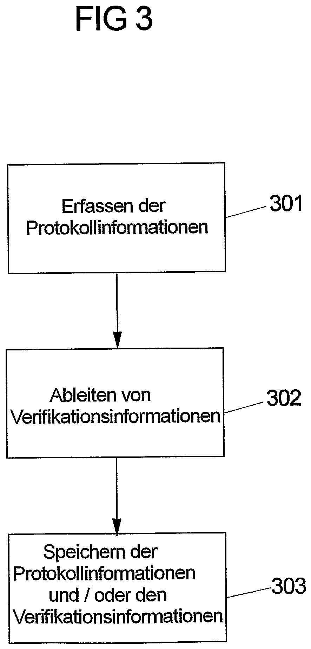

Die Fig. 3 betrifft Verfahrensschritte zum Erfassen und Ableiten von Verifikations-Informationen betreffend die Kenntnisnahme einer Primär-Information beim Adressaten B, und nicht nur bei dessen TK-Endsystem 2. Es ist vorgesehen, dass sämtliche Protokollinformationen erfasst, dokumentiert und gespeichert werden, die im Rahmen der Übertragung der Primär-Informationen zwischen den involvierten TK-Endsystemen 1, 2 übertragen werden, Schritt 301.

In Schritt 302 wird versucht, aus diesen Informationen Verifikations-Informationen der genannten Art abzuleiten. Dies kann über eine intelligente Software erfolgen, die die Protokollinformationen auswertet. Beispielsweise kann vorgesehen sein, dass der Absender, wobei in diesem Fall die aktive Mitwirkung des Absenders bei der Erzeugung von Verifikations-Informationen erforderlich ist, den Empfang der Primär-Information mittels einer digitalen Unterschrift oder einer anderen Authentifizierung bestätigt.

Die Protokollinformationen und/oder Verifikations-Informationen, bevorzugt beide, werden dann in Schritt 303 gespeichert, wobei das Speichern der Informationen bevorzugt beim Endsystem 1 des Absenders, grundsätzlich jedoch auch an anderer Stelle, beispielsweise beim Endsystem 2 des Adressaten, einem intermediären Adressaten 3 und/oder einem Interaktionsautomat 4 erfolgen kann.

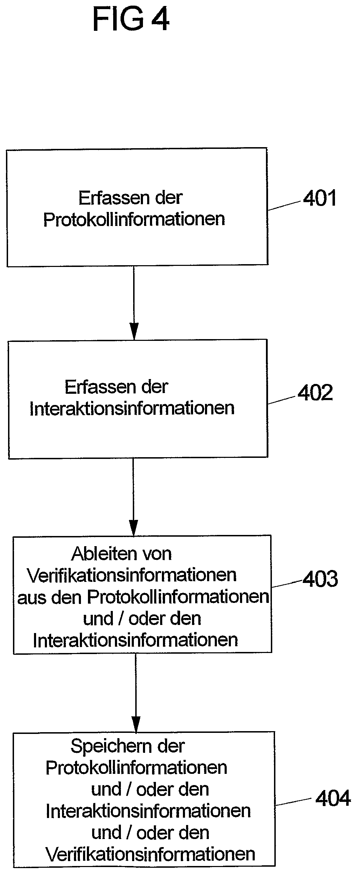

Die Fig. 4 zeigt ein weiteres Ausführungsbeispiel, das neben einem Erfassen 401 der Protokollinformationen entsprechend der Fig. 3 zusätzlich ein Erfassen von Interaktionsinformationen in Schritt 402 umfasst. Diese Interaktionsinformationen betreffen Informationen, die durch eine direkte oder indirekte Interaktion mit dem Adressaten B erzeugt wurden, entweder bei Erhalt der Information beim Adressaten oder in einem darauf folgenden Kommunikationsvorgang. Es wird anhand von Ausführungsbeispielen noch näher erläutert werden.

In Schritt 403 werden dann aus den Interaktionsinformationen und/oder den Protokollinformationen eine Verifikations-Information abgeleitet. Dabei können Protokollinformationen dazu dienen, die Auswertung der Interaktionsinformationen zu unterstützen. Auch kann vorgesehen sein, dass nur Interaktionsinformationen erfasst und ausgewertet werden. Eine Auswertung der Interaktionsinformationen und/oder Protokollinformationen ermöglicht die Bereitstellung einer Verifikations-Information zumindest der Verifikationsstufe 4 der Fig. 2. In Schritt 404 werden Protokollinformationen und/oder Interaktionsinformationen und/oder Verifikations-Informationen dann gespeichert, wobei das Speichern wie in Bezug auf die Fig. 3 erläutert beim Absender oder auch anderen Dateneinrichtungen erfolgen kann.

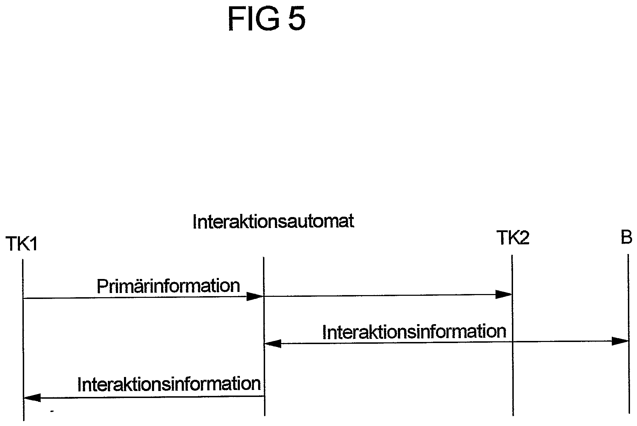

Die Fig. 5 zeigt eine Kommunikationssequenz zwischen der dem Absender A zugeordneten TK-Einrichtung 1, der dem Adressaten B zugeordneten TK-Einrichtung 2, einem Interaktionsautomaten (zum Beispiel entsprechend dem Interaktionsautomat 4 der Fig. 1) und dem Adressaten B.

Die Primär-Information wird von dem TK-Endsystem 1 zunächst an den Interaktionsautomaten 4 gesandt und vom Interaktionsautomaten 4 weiter übertragen an das TK-Endsystem 2. Der Interaktionsautomat 4 fungiert dabei als intermediärer Adressat. In anderen Ausgestaltungen ist jedoch ebenso möglich, dass die Übertragung der Primär-Information von dem TK-Endsystem 1 an das TK-Endsystem 2 direkt, das heißt ohne Involvierung des Interaktionsautomaten 4, erfolgt, wobei in diesem Fall der Interaktionsautomat 4 bevorzugt eine Kopie der übertragenen Information erhält.
Es wird darauf hingewiesen, dass die Primär-Information beim Interaktionsautomaten oder anderwo eine Medienkonvertierung erfahren kann. Beispielsweise ist die Primär-Information in einer enthalten und wird die Primär-Information im Interaktionsautomaten durch einen Sprachgenerator in eine Sprachnachricht umgewandelt, die dann über das Telefonnetz zugestellt wird.
Im Rahmen der Übertragung der Primär-Information kann der Absender A Verifikations-Informationen der Verifikationsstufen 1 bis 3 der Fig. 2 erhalten, das heißt er kann insbesondere darüber Sicherheit erlangen, dass die Information abgesandt, beim Empfänger empfangen und dort gelesen wurde. Weitergehende Informationen sind nicht zugänglich.
Nun initiiert der Interaktionsautomat 4 beispielsweise im Rahmen einer eigenen Kommunikationsverbindung eine Interaktion mit dem Teilnehmer B. Diese Interaktion kann über das TK-Endsystem 2, aber auch über eine andere technische Einrichtung, beispielsweise ein Mobiltelefon des Adressaten B erfolgen. Ein Anruf wird getätigt. Der Anruf kann sich beispielsweise auf den Inhalt der zuvor übertragenen Primär-Information beziehen. Der Inhalt des Gesprächs mit dem Adressaten B und damit die Reaktion des Adressaten B wird dabei in einer Ausgestaltung gespeichert. Beispielsweise ist eine Reaktion des Adressaten in dem Sinne denkbar, dass er bestätigt, die E-Mail erhalten zu haben. Auch ist es denkbar, dass der Adressat B - möglicherweise in emotionaler Unbedachtsamkeit - in dem Telefonat auf den Inhalt der übersandten Primär-Information eingeht. Solche Informationen belegen eindeutig die Kenntnisnahme der Primär-Information und auch das semantische Verstehen der Primär-Informationen beim Adressaten B. Da es in bestimmten Rechtsordnungen es möglicherweise als rechtswidrig angesehen wird Telefongespräche ohne Einwilligung des Gesprächspartners aufzuzeichnen, so ist vorgesehen, dass anstatt des Telefonats Informationen aufgezeichnet werden, die aus dem Telefonat ableitbar sind. Dabei handelt es sich um eine abgeleitete Information, aus der sich zumindest eine Teilmenge des Inhalts des Telefonates und/oder die Identität des Gesprächspartners ableiten lässt, ohne mit dem Telefonat identisch zu sein oder dieses rekonstruierbar zu machen. Es ist vorgesehen, dass als abgeleitete Information eine Spektralanalyse-Information zu den Sprachbekundungen des Adressaten aufgezeichnet wird.
Es wird darauf hingewiesen, dass der Interaktionsautomat mit einem intelligenten Sprachsystem ausgestattet sein kann, so dass der Interaktionsautomat selbständig ein Telefonat mit dem Adressaten B führen kann. In anderen Ausgestaltungen ist dem Interaktionsautomat ein meschlicher Teilnehmer zugeordnet, der das Telefonat führt. Ebenso kann vorgesehen sein, dass der Interaktionsautomat beim Absender A angeordnet ist, wobei der Absender A das Telefonat mit dem Adressaten führt.
Ein weiteres Beispiel zur Generation von Interaktionsinformationen liegt in der Übersendung einer weiteren E-Mail an den Adressaten bzw. dessen TK-Endsystem 2. Diese E-Mail kann sich ebenfalls indirekt auf die zuvor übersandte Primär-Information beziehen. Die Reaktion auf die E-Mail kann eine Interaktionsinformation darstellen, aus der sich Verifikations-Informationen ableiten lassen. Wenn der Adressat auf die E-Mail beispielsweise dahingehend reagiert, dass er die erste E-Mail nicht gelesen habe, so lässt sich daraus zumindest ableiten, dass der Adressat die erste E-Mail zur Kenntnis genommen hat.
Ebenso ist es möglich, dass im Rahmen einer zweiten E-Mail oder anderen elektronischen Nachricht, oder auch bei Übersendung der Primär-Information ein Cookie auf dem TK-Endsystem des Adressaten B installiert wird. Dieses Cookie kann beispielsweise derart ausgestaltet sein, dass es das Öffnen der übersandten Primär-Information dokumentiert, einschließlich der Erfassung von Log-In-Informationen oder anderer Authentifizierungsinformationen des Nutzers. Üblicherweise hat sich ein Nutzer eines PCs oder Laptops am Anfang der Nutzung durch ein Log-in, das der Authentifizierung dient, zu identifizieren, so dass hierüber eine Identifizierung des Nutzers und damit Erkennung des Adressaten möglich ist. Auch andere Informationen können durch das Cookie gespeichert und zu gegebener Zeit ausgelesen werden. Die Informationen können dabei zunächst beim Adressaten und dessen Endsystem gespeichert oder sogleich an den Absender oder ein anderes Endsystem übertragen werden.
Die Erfindung beschränkt sich in ihrer Ausführung nicht auf die vorstehend dargestellten Ausführungsbeispiele. Beispielsweise kann zusätzlich vorgesehen sein, dass
- der Interaktionsautomat menschliche Interaktion und/oder eine Photosequenz auf dem Zustellungsweg umfasst,
- Annahmeverweigerungs-Nachweise gespeichert und ausgewertet werden,
- ein Konvertieren der Darstellung der Primär-Information nicht nur Nachrichteninhaltliche "Medien-Konvertierung", sondern auch "Zustellungs-Adresse/-Modus"-Konvertierung (etwa Sprache oder juristische Präambel oder Rückversicherung des Autorisierungsgrades des Empfängers), oder auch "Nichtab-streitbarkeitsstufen"-Konvertierung der unterschiedlichsten Varianten, auch zugunsten eines Dritten, umfasst,
- erzeugte Verifikationsinformationen als Beweismittel der Zustellung jederzeit abrufbar, online steuerbar, online nachverfolgbar, interaktiv, Alarme auslösend, bestätigbar, beurkundbar, und/oder unterschiedlichen Medienkonvertierungen zugänglich sind,
- sämtliche Informationen verschlüsselt übertragbar sind, so dass sie nur dem Absender oder nur ihm und dem Adressaten oder nur ihm und anderen spezifizierten Personengruppen verständlich sind, teilweise oder in Gänze, und ggf. mit einer Schlüssel-Vereinbarung erst während der Zustellung,
- die Nachrichten nichtabstreitbare Absender-Legitimatioin/-Identität und/oder Inhalts-Authenzität und/oder Adressaten-Identität enthalten können, wobei diese Art der Nichtbestreitbarkeit von einem vom Absender beauftragtem Notar stammen kann,
- zu den Nichtabstreitbarkeitsstufen auch angekündigte und/oder unerwartete und/oder bewusste Verfahren sowie ein-/beidseitig Sprachbekundungen aufzeichnende Verfahren gehören können, letztere ggf. mindestens eine "Spektralanalyse-Information" aussendend oder verschleiert anfordernd,
- Mitwirkungsmöglichkeiten eines involvierten Netzes, insbesondere des die Zustellung terminierenden Netzes, bestehen,
- eine Wechselwirkung mit Kreditreform/Schufa etc., Einzugsunternehmen, Kreditkartenunternehmen etc. besteht,
- Verifikations-Information über einen Anwalt oder Notar oder eine vom Absender benötigte Verschlüsselungs-"trusted entity" - unterhalb der bekannten "trusted third party" erfasst und/oder gespeichert wird,
- eine Selbstdokumentation der Zustellung erfolgt, und/oder
- eine "indirekten Zustellung", etwa Inhalte-basiert erfolgt,
- Protokollinformationen während der Zustellung der Primär-Information (ggf. auf unterschiedlichen Protokoll-Ebenen) "mitgeschnitten" bzw. mindestens die absenderseitig erfolgenden Protokollschritte gespeichert werden,
- das Ergebnis einer Zustellung der Primär-Information durch das Anwendungssystem (im Endsystem des Adressaten) signalisiert wird und mindestens die Protokollierung des Anwendungssystems z.B. im Endsystem des Absenders gespeichert wird,
- Protokollinformationen während der Zustellung der Primär-Information (ggf. auf unterschiedlichen Protokoll-Ebenen) vom Absender zu einem intermediären Adressaten "mitgeschnitten" oder mindestens die absenderseitig erfolgenden Protokollschritte gespeichert werden, und
- Protokollinformationen während der Zustellung der Primär-Information (ggf. auf unterschiedlichen Protokoll-Ebenen) von einem intermediären Adressaten zum End-Adressaten "mitgeschnitten" oder mindestens die erfolgenden Protokollschritte auf der Seite des intermediären Adressaten gespeichert und/oder an den Absender übermittelt werden.

## Patentansprüche

1. Verfahren der Zustellung einer in mindestens einer elektronischen Darstellung vorliegenden Primär-Information, aufweisend die Schritte:
- Übertragen der Primär-Information über mindestens ein Kommunikationsnetz (5) an mindestens ein Kommunikationssystem (2), das einem Adressaten (B) der Primär-Information zugeordnet ist,
- Erzeugen von Verifikations-Information betreffend die Kenntnisnahme der Primär-Information beim Adressaten (B), und
- Speichern bei einem dem Adressaten (B) zugeordneten Kommunikations-Endsystem und/oder Übertragen dieser Verifikations-Information über mindestens ein Kommunikationsnetz (5) und Speichern der übertragenen Verifikations-Information,
- wobei das Erzeugen von Verifikations-Information eine direkte oder indirekte Interaktion mit dem Adressaten (B), für den die Primär-Information bestimmt ist, nach und/oder bei Erhalt der Primär-Information beim Kommunikationssystem (2) umfasst,
- die Interaktion mit dem Adressaten (B) ein Telefonat mit dem Adressaten (B) umfasst, das sich inhaltlich direkt oder indirekt auf die übersandte Primär-Information bezieht, und
- als Verifikations-Information eine aus dem Telefonat abgeleitete Information gespeichert wird, nämlich eine Spektralanalyse-Information zu den Sprachbekundungen des Adressaten.

2. Verfahren nach Anspruch 1, **dadurch gekennzeichnet, dass** das Erzeugen von Verifikations-Information zur Kenntnisnahme der Primär-Information beim Adressaten (B) die Bestimmung mindestens einer Information umfasst, die den Adressaten (B) darin beschränkt, die Tatsache der Kenntnisnahme der Primär-Information abzustreiten.

3. Verfahren nach Anspruch 1 oder 2, **dadurch gekennzeichnet, dass** die Interaktion mit dem Empfänger (B) für diesen nicht erkennbar mit der Erzeugung der Verifikations-Information zusammenhängt.

4. Verfahren nach einem der Ansprüche 1 bis 3, **dadurch gekennzeichnet, dass** die Interaktion mit dem Adressaten (B) das Übersenden einer E-Mail an den Adressat (B) umfasst, die sich inhaltlich direkt oder indirekt auf die übersandte Primär-Information bezieht, sowie eine Reaktion des Adressaten (B) auf diese E-Mail, und dass das Speichern der Verifikations-Information das Speichern der E-Mails umfasst.

5. Verfahren nach einem der Ansprüche 1 bis 4, **dadurch gekennzeichnet, dass** die Interaktion mit dem Adressaten (B) das Übersenden eines Computerprogramms an dessen Kommunikationsgerät (4) umfasst, das sich dort automatisch installiert, wobei das Computerprogramm dazu eingerichtet ist, ein Lesen der empfangenen Information durch den Adressat (B) zu erfassen und diese Verifikations-Information zu speichern und/oder an den Absender der Information oder einen Dritten zu senden.

6. Verfahren nach einem der Ansprüche 1 bis 5, **dadurch gekennzeichnet, dass** die Interaktion mit dem Adressaten (B) durch einen Interaktionsautomaten (4) automatisiert durchgeführt wird.

7. Verfahren nach Anspruch 6, **dadurch gekennzeichnet, dass** der Interaktionsautomat (4) Informationen über das Kommunikationssystem (2) und/oder seinen Adressat (B) erhält und/oder ermittelt und eine Interaktion mit dem Adressaten (B) zur Erzeugung der Verifikations-Information in Abhängigkeit von diesen Informationen vornimmt.

8. Verfahren nach einem der vorangehenden Ansprüche, **dadurch gekennzeic hnet**, dass das Erzeugen von Verifikations-Information ein Erfassen und Auswerten von Authentifizierungs-Informationen des Adressaten (B) umfasst.

9. Verfahren nach Anspruch 8, **dadurch gekennzeichnet, dass** eine Authentifizierungs-Informationen bei Lesen der Primär-Information durch den Adressaten (B) erzeugt und gespeichert und/oder zusammen mit einer Lesebestätigung an den Absender (A) der Primär-Information oder einen Dritten (3, 4) über mindestens ein Kommunikationsnetz gesandt wird.

10. Verfahren nach einem der vorangehenden Ansprüche, **dadurch gekennzeic hnet**, dass das Erzeugen von Verifikations-Information ein Auswerten von Protokoll- und/oder Signalisierungsinformationen betreffend die Übertragung der Primär-Information umfasst.

11. Verfahren nach einem der vorangehenden Ansprüche, **dadurch gekennzei chnet**, dass das Erzeugen von Verifikations-Information ein Auswerten von Nachweisen zu einer Annahmeverweigerung der Primär-Information durch das Kommunikationssystem (2) des Adressaten (B) umfasst.

12. Verfahren nach einem der vorangehenden Ansprüche, **dadurch gekennzei chnet**, dass die Verifikations-Information zusammen mit der Primär-Information gespeichert oder übertragen wird.

13. Verfahren nach einem der vorangehenden Ansprüche, **dadurch gekennzei chnet**, dass die Verifikations-Information vor oder nach dem Speichern an einen Dritten (3, 4) übertragen wird, insbesondere an einen vertrauenswürdigen Dritten (3).

14. Telekommunikationsanordnung zur Durchführung des Verfahrens nach Anspruch 1, aufweisend:
- mindestens ein Kommunikationsnetz (5);
- mindestens ein erstes Kommunikationssystem (1), das einem Absender (1) einer Primär-Information zugeordnet ist,
- mindestens ein zweites Kommunikationssystem (2), das einem Adressaten (B) einer Primär-Information zugeordnet ist,
- Mittel zum Übertragen einer Primär-Information von dem mindestens einen ersten Kommunikationssystem (1) über das mindestens eine Kommunikationsnetz (5) an das mindestens eine zweite Kommunikationssystem (2),
- Mittel (4) zum Erzeugen von Verifikations-Information betreffend die Kenntnisnahme der Primär-Information beim Adressaten (B), und
- Mittel zum Speichern bei einem dem Adressaten (B) zugeordnetem Kommunikations-Endsystem und/oder Übertragen dieser Verifikations-Information über das mindestens eine Kommunikationsnetz (5) und Speichern der übertragenen Verifikations-Information,
- wobei die Mittel (4) zum Erzeugen von Verifikations-Information dazu ausgebildet sind, eine direkte oder indirekte Interaktion mit dem Adressaten (B), für den die Primär-Information bestimmt ist, nach und/oder bei Erhalt der Primär-Information beim zweiten Kommunikationssystem (2) durchzuführen,
- wobei die Interaktion mit dem Adressaten (B) ein Telefonat mit dem Adressaten (B) umfasst, das sich inhaltlich direkt oder indirekt auf die übersandte Primär-Information bezieht, und als Verifikations-Information eine aus dem Telefonat abgeleitete Information gespeichert wird, nämlich eine Spektralanalyse-Information zu den Sprachbekundungen des Adressaten.

15. Telekommunikationseinrichtung, die zur Verwendung in dem Verfahren nach Anspruch 1 geeignet ist, aufweisend:
- Mittel (4) zum Erzeugen von Verifikations-Information betreffend die Kenntnisnahme einer Primär-Information, die an ein einem Adressaten (B) der Primär-Information zugeordnetes Kommunikationssystem (2) übertragen wird, durch den Adressaten (B),
- wobei die Mittel (4) zum Erzeugen von Verifikations-Information dazu ausgebildet sind, eine direkte oder indirekte Interaktion mit dem Adressaten (B), für den die Primär-Information bestimmt ist, nach und/oder bei Erhalt der Primär-Information bei dem Kommunikationssystem (2) durchzuführen, und Daten zur dieser Interaktion und/oder daraus abgeleitete Daten zu speichern und/oder an mindestens ein weiteres Kommunikationssystem (2, 3) zu übertragen und die übertragenen Daten zu speichern,
- wobei die Interaktion mit dem Adressaten (B) ein Telefonat mit dem Adressaten (B) umfasst, das sich inhaltlich direkt oder indirekt auf die übersandte Primär-Information bezieht, und als Verifikations-Information eine aus dem Telefonat abgeleitete Information gespeichert wird, nämlich eine Spektralanalyse-Information zu den Sprachbekundungen des Adressaten.

## Claims

1. A method of delivering primary information present in at least one electronic representation, comprising the steps of:
- transmitting the primary information via at least one communication network (5) to at least one communication system (2) associated with an addressee (B) of the primary information,
- generating verification information regarding the notice of the primary information at the addressee (B), and
- storing at an communication end system associated to the addressee (B) and / or transmitting this verification information via at least one communication network (5) and storing the transmitted verification information,
- wherein the generation of verification information comprises direct or indirect interaction with the addressee (B) for which the primary information is intended after and/or during receipt of the primary information at the communication system (2),
- interaction with the addressee (B) comprises telephone conversation with the addressee (B), whose content refers directly or indirectly to the transmitted primary information, and
- information derived by the telephone conversation, particularly spectral analysis information referring to verbal statements of the addressee, is stored as verification information.

2. The method according to claim 1, **characterized in that** the generation of verification information for the notice of the primary information at the addressee (B) comprises determination of at least one information which restricts the addressee (B) from denying the fact of the notice of the primary information.

3. The method according to claim 1 or 2, **characterized in that** the interaction with the receiver (B) is not recognizable related to the generation of the verification information for him.

4. The method according to one of claims 1 to 3, **characterized in that** the interaction with the addressee (B) comprises sending of an e-mail to the addressee (B) whose content relates directly or indirectly to the transmitted primary information and a response of the addressee (B) to this e-mail, and that storing the verification information comprises storing the e-mails.

5. The method according to one of claims 1 to 4, **characterized in that** the interaction with the addressee (B) comprises the transmission of a computer program to his communication device (4) which automatically installs there, the computer program being adapted to gather a lecture of the received information by the addressee (B) and store this verification information and / or send it to the sender of the information or a third party.

6. The method according to one of claims 1 to 5, **characterized in that** the interaction with the addressee (B) is carried out automatically by an interaction automaton (4).

7. The method according to claim 6, **characterized in that** the interaction automaton (4) receives and / or determines information about the communication system (2) and / or its addressee (B) and performs an interaction with the addressee (B) for generating the verification information depending on this information.

8. The method according to one of preceding claims, **characterized in that** the generation of verification information comprises detection and evaluation of authentication information of the addressee (B).

9. The method according to claim 8, **characterized in that** authentication information is generated and stored when the primary information is read by the addressee (B) and / or sent together with a read acknowledgment to the sender (A) of the primary information or a third party (3, 4) via at least one communication network.

10. The method according to one of the preceding claims, **characterized in that** the generation of verification information comprises evaluation of protocol and / or signaling information relating to the transmission of the primary information.

11. The method according to one of the preceding claims, **characterized in that** the generation of verification information comprises evaluation of proofs for acceptance refusal of the primary information by the communication system (2) of the addressee (B).

12. The method according to one of the preceding claims, **characterized in that** the verification information is stored or transmitted together with the primary information.

13. The method according to one of the preceding claims, **characterized in that** the verification information is transmitted before or after the storage to a third party (3, 4), particularly a trustable third party.

14. A telecommunication arrangement for carrying out the method according to claim 1, comprising:
- at least one communication network (5);
- at least one first communication system (1) associated with a sender (1) of primary information,
- at least one second communication system (2) associated with an addressee (B) of primary information,
- means for transmitting primary information from the at least one first communication system (1) via the at least one communication network (5) to the at least one second communication system (2),
- means (4) for generating verification information concerning the notice of the primary information at the addressee (B), and
- means for storing at an communication end system associated to the addressee (B) and / or transmitting this verification information via at least one communication network (5) and storing the transmitted verification information,
- wherein the means (4) for generating verification information are adapted to carry out direct or indirect interaction with the addressee (B) for which the primary information is intended after and/or during receipt of the primary information at second communication system (2),
- wherein the interaction with the addressee (B) comprises telephone conversation with the addressee (B) whose content refers directly or indirectly to the transmitted primary information and information derived by the telephone conversation, particularly spectral analysis information referring to verbal statements of the addressee, is stored as verification information.

15. A telecommunication device adapted for use in the method according to claim 1, comprising:
- means (4) for generating verification information concerning the notice of the primary information which is transmitted to a communication system (2) associated to the addressee (B) of primary information by the addressee (B),
- wherein the means (4) for generating verification information are adapted to carry out direct or indirect interaction with the addressee (B) for which the primary information is intended after and/or during receipt of the primary information at communication system (2), and to store data referring to this interaction and / or data derived from them and / or to transmit data referring to this interaction and / or data derived from them and store the transmitted data,
- wherein the interaction with the addressee (B) comprises telephone conversation with the addressee (B) whose content refers directly or indirectly to the transmitted primary information and information derived by the telephone conversation, particularly spectral analysis information referring to verbal statements of the addressee, is stored as verification information.

## Revendications

1. Un procédé de fourniture d'une information primaire présente dans au moins une représentation électronique, comprenant les étapes:
- transmettre l'information primaire via au moins un réseau de communication (5) à au moins un système de communication (2) associé à un destinataire (B) d'information primaire,
- générer une information de vérification concernant la connaissance d'information primaire au destinataire (B), et
- stocker dans un système de communication terminal associé au destinataire (B) et / ou transmettre cette information de vérification via au moins un réseau de communication (5) et stocker l'information de vérification transmise,
- dans lequel la génération d'information de vérification comprend une interaction directe or indirecte avec le destinataire (B) pour lequel l'information primaire est destinée après ou pendant la réception d'information primaire au système de communication (2),
- l'interaction avec le destinataire (B) comprend une conversation téléphonique avec le destinataire (B) dont le contenu se rapporte directement ou indirectement à l'information primaire transmise, et
- une information dérivée de la conversation téléphonique, en particulier une information d'analyse spectrale concernant les expressions verbales du destinataire est stockée comme l'information de vérification.

2. Le procédé selon la revendication 1, **caractérisé en ce que** la génération d'information de vérification pour la connaissance d'information primaire au destinataire (B) comprend la détermination d'au moins une information qui empêche le destinataire (B) de nier le fait de la connaissance d'information primaire.

3. Le procédé selon la revendication 1 ou 2, **caractérisé en ce que** l'interaction avec le récepteur (B) est liée pour celui-ci non reconnaissable à la génération d'information de vérification.

4. Le procédé selon l'une quelconque des revendications 1 à 3, **caractérisé en ce que** l'interaction avec le destinataire (B) comprend l'envoi d'un courrier électronique au destinataire (B) dont le contenu se rapporte directement ou indirectement à l'information primaire transmise et d'une réponse du destinataire (B) à ce courrier électronique, et que le stockage d'information de vérification comprend le stockage des courriers électroniques.

5. Le procédé selon l'une quelconque des revendications 1 à 4, **caractérisé en ce que** l'interaction avec le destinataire (B) comprend la transmission d'un programme informatique à son dispositif de communication (4) qui s'y installe automatiquement, le programme informatique étant adapté pour capturer une lecture d'information reçue par le destinataire (B) et pour stocker cette information de vérification et / ou pour envoyer cette information de vérification à l'expéditeur d'information ou à un tiers.

6. Le procédé selon l'une quelconque des revendications 1 à 5, **caractérisé en ce que** l'interaction avec le destinataire (B) est réalisée automatiquement par un automate d'interaction (4).

7. Le procédé selon la revendication 6, **caractérisé en ce que** l'automate d'interaction (4) reçoit et / ou détermine des informations sur le système de communication (2) et / ou son destinataire (B) et effectue une interaction avec le destinataire (B) pour générer l'information de vérification en fonction de ces informations.

8. Le procédé selon l'une quelconque des revendications précédentes, **caractérisé en ce que** la génération d'information de vérification comprend une détection et une évaluation d'informations d'authentification du destinataire (B).

9. Le procédé selon la revendication 8, **caractérisé en ce qu'**une information d'authentification est générée et stockée lorsque l'information primaire est lue par le destinataire (B) et / ou est envoyé avec un accusé de réception de lecture à l'expéditeur (A) d'information primaire ou à un tiers (3,4) via au moins un réseau de communication.

10. Le procédé selon l'une quelconque des revendications précédentes, **caractérisé en ce que** la génération d'information de vérification comprend une évaluation d'informations de protocole et / ou de signalisation concernant la transmission d'information primaire.

11. Le procédé selon l'une quelconque des revendications précédentes, **caractérisé en ce que** la génération d'information de vérification comprend une évaluation de preuves pour un refus d'acceptation d'information primaire par le système de communication (2) du destinataire (B).

12. Le procédé selon l'une des revendications précédentes, **caractérisé en ce que** l'information de vérification est stockée ou transmise avec l'information primaire.

13. Le procédé selon l'une quelconque des revendications précédentes, **caractérisé en ce que** l'information de vérification est transmise avant ou après le stockage à un tiers (3, 4), en particulier à un tiers fiable.

14. Un dispositif de télécommunication pour la mise en oeuvre du procédé selon la revendication 1, comprenant:
- au moins un réseau de communication (5);
- au moins un premier système de communication (1) associé à un expéditeur (1) d'information primaire,
- au moins un second système de communication (2) associé à un destinataire (B) d'information primaire,
- des moyens de transmission d'information primaire d'au moins un premier système de communication (1) via le au moins un réseau de communication (5) au au moins un second système de communication (2),
- des moyens (4) pour la génération d'information de vérification concernant la connaissance d'information primaire au destinataire (B), et
- des moyens pour stocker cette information de vérification dans un système de communication terminal associé au destinataire (B) et / ou transmettre cette information de vérification via le au moins un réseau de communication (5) et stocker l'information de vérification transmise,
- dans lequel les moyens (4) pour la génération d'information de vérification sont adaptés pour effectuer une interaction directe or indirecte avec le destinataire (B) pour lequel l'information primaire est destinée après ou pendant la réception d'information primaire au second système de communication (2),
- dans lequel l'interaction avec le destinataire (B) comprend une conversation téléphonique avec le destinataire (B) dont le contenu se rapporte directement ou indirectement à l'information primaire transmise et une information dérivée de la conversation téléphonique, en particulier une information d'analyse spectrale concernant les expressions verbales du destinataire est stockée comme l'information de vérification.

15. Un dispositif de télécommunication adapté pour être utiliser dans le procédé selon la revendication 1, comprenant:
- des moyens (4) pour la génération d'information de vérification concernant la connaissance d'information primaire qui est transmise à un système de communication (2) associé à un destinataire (B) d'information primaire par le destinataire (B),
- dans lequel les moyens (4) pour la génération d'information de vérification sont adaptés pour effectuer une interaction directe or indirecte avec le destinataire (B) pour lequel l'information primaire est destinée après ou pendant la réception d'information primaire au système de communication (2) et pour stocker des données concernant cette interaction et / ou des données dérivées de celles-ci et / ou pour transmettre des données concernant cette interaction et / ou des données dérivées de celles-ci au au moins un autre système de communication (2, 3) et stocker les données transmises,
- dans lequel l'interaction avec le destinataire (B) comprend une conversation téléphonique avec le destinataire (B) dont le contenu se rapporte directement ou indirectement à l'information primaire transmise et une information dérivée de la conversation téléphonique, en particulier une information d'analyse spectrale concernant les expressions verbales du destinataire, est stockée comme l'information de vérification.
